# EUROPÄISCHE PATENTSCHRIFT

(11) **EP 0 348 854 B1**
(45) Veröffentlichungstag und Bekanntmachung des Hinweises auf die Patenterteilung: **01.03.1995**
(21) Anmeldenummer: 89111551.1
(22) Anmeldetag: 24.06.1989
(51) Int. Cl.: F16K 31/04

(54) **Steuervorrichtung für mindestens ein Ventil**
Actuating device for at least one valve
Dispositif de commande pour au moins un clapet

(30) Priorität: 28.06.1988 DE 3821700
(43) Veröffentlichungstag der Anmeldung: 03.01.1990
(73) Patentinhaber: DEERE & COMPANY, Moline, Illinois 61265 (US)
(72) Erfinder: Becker, Manfred, D-6710 Frankenthal (DE)
(74) Vertreter: Feldmann, Bernhard

(56) Entgegenhaltungen:
- EP-A- 0 078 982
- DE-A- 3 638 844
- DE-A- 3 638 844
- GB-A- 1 340 570
- US-A- 3 423 935
- US-A- 4 199 132
- US-E- 30 135

## Beschreibung

Die Erfindung betrifft eine Steuervorrichtung für mindestens ein Ventil, insbesondere für ein Sitzventil.

Die US-A-4,199,132 offenbart einen ferngesteuerten Ventilzusammenbau mit einem elektrischen Motor und einem Ventilschieber. Auf eine Ausgangswelle des Motors ist ein Exzenter aufgesetzt, an dem stets eine der Endflächen des Ventilschiebers anliegt. Zum Öffnen des Ventils wird der Exzenter um ca. 180° geschwenkt und der Ventilschieber von seinem Sitz abgehoben. Die Bewegung des Exzenters wird mittels Kontaktschaltern gesteuert. Zum Schließen des Ventils wird der Exzenter in der entgegengesetzten Richtung wiederum um ca. 180° geschwenkt und der Ventilschieber mittels einer Feder auf seinen Sitz gedrückt.

Diese Vorrichtung ist insofern nachteilig, als nur eine Auf-Zu-Steuerung möglich ist, bei der der Exzenter stets um ca. 180° schwenkt. Die Möglichkeit, den Ventilschieber nur über kurze Wege zu bewegen, besteht nicht. Hierzu müßte die jeweilige Stellung des Exzenters genau bestimmt werden können, was weder mit den Kontaktschaltern noch mit dem einfachen Elektromotor möglich ist.

Auch die DE-A-36 38 844 zeigt eine Steuereinrichtung für ein einerseits federbelastetes Ventil, wobei die Verstellung des Ventilstößels über eine schrittmotorbetriebene Spindel erfolgt. Die Stellung der Spindel wird über ein Meßpotentiometer erfaßt.

Diese Steuervorrichtung weist ebenfalls den Nachteil auf, daß die Ausgangsstellung der Spindel nur schwer und mit Unsicherheiten in der Genauigkeit des Meßpotentiometers erfaßbar ist.

Die US 3,423,935 offenbart eine Steuervorrichtung für die Hub- und Senkventile einer Dreipunktregelhydraulik eines Ackerschleppers. Mittels eines mechanisch, hydraulisch oder elektrisch verstellbaren Exzenters werden Sitzventile von ihren Sitzen abgehoben und geben einen Flüssigkeitsfluß frei. Nach dem Steuervorgang wird der Exzenter manuell in eine Neutralstellung zurück gebracht, in der die Sitzventile von ihm abheben.

Bei dieser Steuervorrichtung muß anfänglich einer Bewegung einer Betätigungsvorrichtung mit einer unterschiedlichen Ansprechzeit der Ventile gerechnet werden, weil die Stellung des Exzenters in der Neutralstellung nicht genau bestimmt ist.

Allen bekannten Steuervorrichtungen haftet zudem der Nachteil an, daß mittels gegebenenfalls vorhandener Elektromotoren Verstellungen in sehr kleinen Bereichen nicht ausreichend genau durchführbar sind.

Die der Erfindung zugrunde liegende Aufgabe wird darin gesehen, eine Steuervorrichtung für mindestens ein Ventil vorzuschlagen, die mit einem geringen Aufwand an Steuermitteln eine hohe Steuerqualität erbringt.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise erfolgt eine direkte, wegabhängige Steuerung des Ventils ohne die Zuhilfenahme von veränderlichen Übertragungsmitteln wie Öl, Luft oder Elektrizität. Aufgrund des Schrittmotors, der sich insbesondere dadurch auszeichnet, daß er digital ansteuerbar und in zwei Richtungen bewegbar ist und daß er ein starkes Selbsthaltemoment aufweist, ist der Verstellweg genau definierbar.

Wenn der Schrittmotor nicht betätigt wird, kann das Betätigungsglied mittels der federbelasteten Ventilkörper zu der Neutralstellung automatisch und zwangsweise geführt werden. Wird das Betätigungsglied, das eine einfache Nocken- oder Hebelwelle sein kann, stets in die Neutralstellung gebracht, dann kann der Schrittmotor für das systeminterne Erkennen der Lage des Betätigungsglieds stets von dessen Neutralstellung ausgehen. Eines Auffindens der Lage des Betätigungsglieds und evtl. gar eines Nachführens des Schrittmotors zum Steuerbeginn bedarf es daher nicht.

Durch die Verwendung eines Exzenters an dem Betätigungsglied, an dem der oder die Ventilkörper zur Anlage kommt (en), kann eine Steuerkurve mit einer bestimmten Charakteristik erstellt werden, wobei die Charakteristik linear oder einer speziellen mathematischen Formel folgend ausgebildet sein kann; sie wird jedenfalls abhängig sein von dem Strömungsverhalten, das mit dem zu steuernden Ventil erreicht werden soll, und von den bestehenden Kraftübertragungsverhältnissen.

Die Neutralstellungsvorrichtung, z. B. bestehend aus einer in eine Nut eingreifenden federbelasteten Kugel, zieht das Betätigungsglied in eine Neutralstellung und arretiert es in dieser. Vorteilhafterweise ist die Neutralstellungsvorrichtung so ausgebildet, daß sie auf dem letzten Teilbewegungsbereich des Betätigungsglieds dessen Rückstellbewegung unterstützt und bei einer Ausführung mit Sitzventilen ein Abheben des Exzenters von den Ventilkörpern bewirkt.

In den Unteransprüchen sind vorteilhafte Ausgestaltungen und Weiterentwicklungen der Erfindung angegeben.

Zum Erlangen der erforderlichen Stellkraft kann ein Reduktionsgetriebe herangezogen werden, das insbesondere als Schnecken-, Stirnrad- oder Planetengetriebe ausgebildet ist.

Im Kraftfluß hinter dem Schrittmotor wird in vielen Fällen eine Kupplung vorgesehen sein, die in bestimmten Situationen den Kraftfluß zwischen dem Schrittmotor und dem Betätigungsglied unterbricht, so etwa wenn eine Störung in der Steuerung auftritt und/oder der Schrittmotor nicht betätigt wird. Auf diese Weise kann das Betätigungsglied in diesen Fällen von Hand bewegt werden.

Betätigungsglieds und evtl. gar eines Nachführens des Schrittmotors zum Steuerbeginn bedarf es daher nicht.

Die Verwendung der Kupplung ermöglicht auch eine abrupte und unmittelbare Beendigung des Verstellvorganges durch einfaches Öffnen der Kupplung, während der Schrittmotor noch läuft.

Es ist dabei denkbar, daß eine Ausgangswelle des Schrittmotors, der Kupplung oder des Reduktionsgetriebes selbst exzentrisch ausgebildet ist oder daß auf ihr - wenn sie einen zylindrischen Querschnitt aufweist - ein Exzenter zentrisch oder exzentrisch montiert ist.

Das Einbringen mindestens eines Schlitzes zum Spreizen in den Exzenter mit einer dazugehörigen verstellbaren Spreizvorrichtung, z. B. einem Spreizkeil oder einem Spreizkonus, erlaubt eine Veränderung der wirksamen Außenform des Exzenters, so daß sich das Steuerverhalten ändert. Als Spreizvorrichtung kann auch eine Schraube mit einem Konusteil angesehen werden, die in einen Konussitz, der von dem Schlitz durchschnitten ist, mittels einer Mutter einpreßbar ist. Der Schlitz hat den Vorteil, daß beim Zurückziehen des Spreizteils aufgrund der Elastizität des Materials des Exzenters, der normalerweise aus hochwertigem Stahl oder Sintherwerkstoff besteht, der Exzenter von sich aus wieder seine ursprüngliche Lage bzw. Form einnimmt.

Anstatt des Schlitzes kann auch der Exzenter aus mehreren zueinander beweglichen Einzelteilen zusammengesetzt sein, die mittels beliebiger Einstellmittel in eine bestimmte Lage zueinander bringbar sind. Zwischen diesen Einzelteilen können Federn oder dergleichen vorgesehen sein, die den Einstellvorgang erleichtern. Vorzugsweise sind die Einzelteile zum Einstellen des Exzenters für Wartungszwecke leicht von außen zugänglich und mit Markierungen versehen, die eine schnelle Durchführung der Wartungsmaßnahmen gewährleisten.

Zur Reduzierung der Reibverluste kann vorgesehen werden, daß der an dem Betätigungsglied anliegende Teil des Ventilkörpers im Bewegungsfall auf diesem abrollt oder auf diesem über einen Schmierfilm gleitet. Der Schmierfilm kann insbesondere dadurch erzeugt werden, daß sich das Betätigungsglied, also gegebenenfalls der Exzenter mit dem Teil des Ventilkörpers innerhalb eines ölgefüllten Gehäuses befindet.

Diese Reduzierung der Reibverluste macht sich insbesondere auch dann bemerkbar, wenn das Betätigungsglied von Federn über die Ventilkörper zurückgestellt wird.

Zum Erreichen einer günstigen Krafteinleitung in die Welle ist diese mit ihrem dem Schrittmotor abgewandten Ende in einem Gehäuse gelagert.

In der Zeichnung ist ein nachfolgend näher beschriebenes Ausführungsbeispiel der Erfindung dargestellt. Es zeigt:
- Fig. 1: eine Steuervorrichtung in Seitenansicht und im Teilschnitt,
- Fig. 2: die Steuervorrichtung in Vorderansicht und im Schnitt und
- Fig. 3: eine vergrößerte Darstellung einer Dichtstelle.

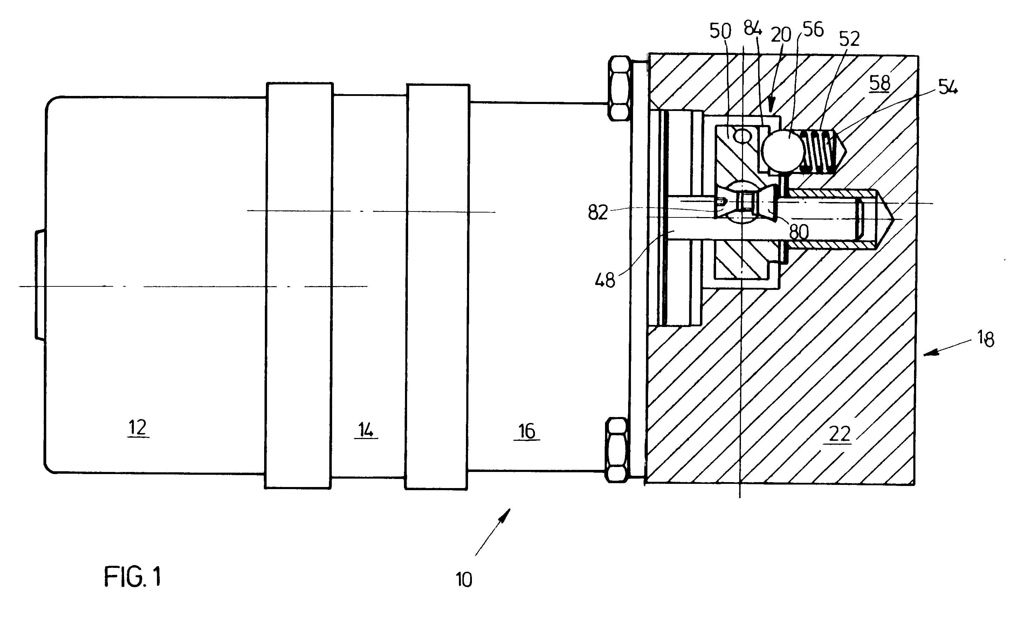

Eine in Figur 1 gezeigte Steuervorrichtung 10 setzt sich im wesentlichen zusammen aus einem Schrittmotor 12, einer Kupplung 14, einem Reduktionsgetriebe 16 und einer Ventileinheit 18 mit einem Betätigungsglied 20, die jeweils in entsprechenden nicht näher benannten Gehäusen untergebracht sind.

Der Schrittmotor 12 ist in diesem speziellen Ausführungsbeispiel ein Klauenpolmotor, der digital angesteuert werden kann und in zwei Richtungen betreibbar ist; außerdem hat er ein großes Selbsthaltemoment inne. Der Verstellweg des Schrittmotors 12 ist sehr genau definierbar. Eine in Figur 1 angedeutete Mittellinie zeigt die Lage seiner Rotorwelle an. Die Steuerung des Schrittmotors 12 erfolgt von einem nicht gezeigten Schalter an einem Instrumentenbrett aus über einen Elektrokreislauf. In einem besonderen Anwendungsfall handelt es sich um einen Elektrokreislauf für die hydraulisch betriebene Dreipunktkupplung eines Ackerschleppers, wobei mittels der Steuereinrichtung 10 der Zufluß von Hydrauliköl zu bzw. von einem Hubzylinder gesteuert wird.

Die Kupplung 14 schließt sich in Richtung auf die Ventileinheit 18 an, wozu die Gehäuse des Schrittmotors 12 und der Kupplung 14 miteinander verflanscht sind. Man erkennt in Figur 1 zudem, daß die Rotationsachse der Kupplung 14 parallel zu der der Rotorwelle des Schrittmotors 12 verläuft, wobei der Versatz insbesondere über ein Schnecken- oder ein Stirnradgetriebe überbrückt werden kann und auch nur in diesem Ausführungsbeispiel gegeben ist - er ist jedenfalls nicht zwingend. Es ist auch möglich, ein Planetengetriebe zu verwenden, sofern mit diesem der Versatz nicht überbrückt werden muß. Die Kupplung 14 ist als eine Elektromagnetkupplung ausgebildet und somit elektrisch oder elektronisch ansteuerbar. Die Ansteuerung der Kupplung 14 ist derart gewählt, daß sie nur dann ein Drehmoment zur Ventileinheit 18 bzw. deren Betätigungsglied 20 überträgt, d. h. geschlossen ist, wenn der Schrittmotor 12 ebenfalls betätigt wird, in allen anderen Fällen, also insbesondere auch bei einem Ausfall des Energiezuführsystems, ist die Kupplung 14 geöffnet. Diese Sicherheitssteuerung sollte vorzugsweise auch beibehalten werden, wenn die Kupplung 14 mechanisch oder mittels Druckmittel (Preßluft, Öl) betätigt wird. Zum Ausschließen von Schlupf in der Kupplung 14 ist es denkbar, deren Kupplungsscheiben formschlüssig auszubilden.

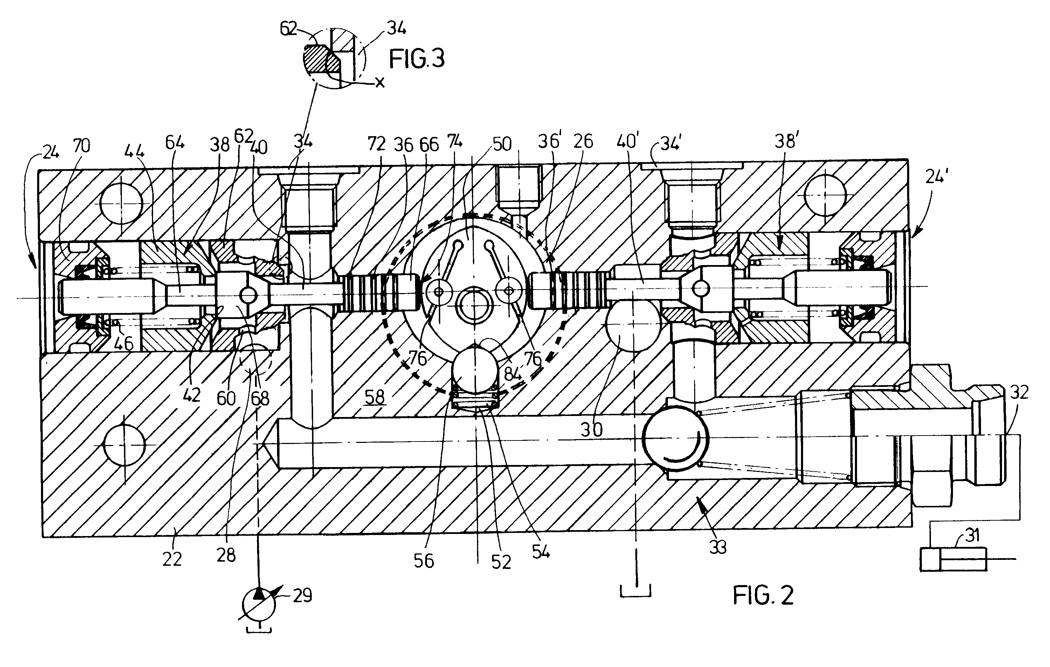

Das Reduktionsgetriebe 16 ist einerseits an die Kupplung 14 und andererseits an die Ventileinheit 18 angebaut; deren Gehäuse sind entsprechend miteinander verflanscht. Mit Blick auf die Figuren 1 und 2 erkennt man, daß der Durchtrieb durch das Reduktionsgetriebe 16, die Rotationsachse der Kupplung 14 und die des Betätigungsglieds 20 koaxial verläuft. Das Reduktionsgetriebe 16 kann ebenfalls als Stirnrad-, Schnecken- oder Planetengetriebe ausgestaltet sein. Die Wahl der Getriebeart hängt von der mit ihr erreichbaren Genauigkeit, den mit ihr einhergehenden Reibverlusten, den Übersetzungsmöglichkeiten und dem erforderlichen Raumbedarf ab.

Die Ventileinheit 18 enthält einen Metallblock 22 mit einer Vielzahl von Bohrungen und Kanälen, von denen jedoch im folgenden nur die für die Erfindung relevanten beschrieben werden.

Das Betätigungsglied 20 enthält eine Welle 48 und einen auf ihr drehfest montierten Exzenter 50, wobei die Welle 48 gleichzeitig die Abtriebswelle der Kupplung 14 bzw. des Reduktionsgetriebes 16 darstellt. Anstelle des in diesem Ausführungsbeispiel vorgesehenen separaten Exzenters 50 könnte die Welle 48 auch endseitig exzentrisch ausgebildet sein und ebenso die technischen Merkmale enthalten, die den Exzenter 50 kennzeichnen.

In dem Metallblock 22 sind zwei Ventilkammern 24, 24′, eine Steuerkammer 26, ein Pumpeneinlaß 28, ein Rücklaufanschluß 30, ein Verbraucherkanal 32, zwei Verbindungskanäle 34, 34' und zwei Ventilkörperkanäle 36, 36′ vorgesehen, wobei der Verbindungskanal 34 als Lastmeldeanschluß verwendet werden kann. Die Druckentlastung des Verbindungskanals 34 erfolgt durch gezielte Leckage entlang der Wandung des Ventilkörperkanals 36 in die drucklose Steuerkammer 26.

Der Verbraucherkanal 32 wird mittels eines Rückschlagventils 33 in Richtung auf das Ventil 38 geschlossen.

In den Ventilkammern 24, 24′ ist jeweils ein Ventil 38, 38′ mit einem Ventilkörper 40, 40′ gelagert, der sich auf dem Weg über den Verbindungskanal 34 bzw. 34′ durch den Ventilkörperkanal 36 bzw. 36′ in die Steuerkammer 26 erstreckt. Die Ventile 38, 38′ sind identisch ausgebildet, weshalb es ausreicht, wenn im folgenden nur das in Figur 2 links gelegene Ventil 38 beschrieben wird.

An einer Schulter 42 des Ventilkörpers 40 stützen sich eine als Dämpfungsventil wirkende Hülse 44 und eine Feder 46 ab und drängen bzw. bewegen diesen in Figur 2 nach rechts in die Steuerkammer 26. Das Ventil 38 enthält noch weitere Bestandteile, wie Ventilsitz, Dichtungen usw., die für die Erfindung aber nicht relevant sind; bedeutend ist vielmehr, daß es sich hierbei um ein Sitzventil handelt, das die Verbindung zwischen dem Pumpeneinlaß 28 und dem Verbindungs- und Verbraucherkanal 34 und 32 öffnet oder schließt, je nachdem in welche Richtung der Ventilkörper 40 bewegt wird.

Die Steuerkammer 26 befindet sich mittig zwischen den beiden Ventilkammern 24, 24′ und weist eine Mittellinie auf, die sich senkrecht zu denen der Ventilkammern 24, 24′ und zumindest parallel zu der Rotationsachse der Kupplung 14 und/oder des Reduktionsgetriebes 16 erstreckt; in diesem Ausführungsbeispiel schneiden sich die Mittellinien zudem. Die Steuerkammer 26 ist als hohler Zylinder ausgebildet, in den sich die Welle 48 und der Exzenter 50 hinein erstrecken. In eine Wand 58 der Steuerkammer 26 ist eine Sackbohrung 52 eingearbeitet, die in sich eine Feder 54 und eine Kugel 56 aufnimmt. Die Sackbohrung 52 ist derart angeordnet, daß sie gegenüber dem Exzenter 50 aus der Wand 58 austritt, und ihre Tiefe ist derart bemessen, daß in ihr die Feder 54 im entspannten Zustand und wenigstens die Hälfte der Kugel 56 Platz finden. Zur Veranschaulichung einiger Ausführungsmöglichkeiten ist in Figur 1 die Sackbohrung 52 in einer eine Stirnwand und in Figur 2 in einer eine Zylinderwand darstellenden Wand 58 untergebracht.

Der Pumpeneinlaß 28 leitet von einer Pumpe 29 kommendes Medium über eine Bohrung 60 in einen Ventilsitz 62, an dem der Ventilkörper 40 ansteht. Abhängig von der Stellung des Ventilkörpers 40 kann das Medium in den Verbindungskanal 34 und von dort in den Verbraucherkanal 32 weiterfließen, von wo aus es zu einem Verbraucher 31 gelangt. Der Zufluß des Mediums aus dem Verbindungskanal 34′ in den Rücklaufanschluß 30 erfolgt analog.

Im Bereich des Ventilsitzes 62 ergeben sich zwei Dichtstellen, einerseits liegt der Ventilkörper 40 dichtend an dem Ventilsitz 62 an, und andererseits liegt der Ventilsitz 62 an einer Wand zwischen der Ventilkammer 24 und dem Verbindungskanal 34 dichtend an (sh. Fig. 3). Der Ventilsitz 62 übernimmt mit seiner minimal radial beweglichen Dichtkante - x - den Ausgleich von etwaigen Bohrungsversätzen und Unrundheiten, wodurch die Dichtung verbessert wird.

Der Ventilkörperkanal 36 weist einen geringen Durchmesser auf und erstreckt sich koaxial zu dem Ventilkörper 40, wobei zwischen beiden eine Dichtpassung im Bereich ihrer Überlappung besteht.

Der Ventilkörper 40 besteht im wesentlichen aus einem Schaft 64, einem den Ventilkörperkanal 36 durchdringenden Steuerkolben 66 und einem Sitzkegel 68 mit der Schulter 42. Der Sitzkegel 68 ist auf dem Schaft 64 tangential und axial festgelegt und kann gegen einen Sitz in dem Ventilsitz 62 mittels der Feder 46 gepreßt werden, um so die Verbindung zwischen dem Verbindungskanal 34 und dem Pumpeneinlaß 28 zu unterbrechen oder herzustellen. Selbstverständlich können der Schaft 64 und der Sitzkegel 68 auch einteilig ausgebildet sein.

Der Steuerkolben 66 ist in dem Ventilkörperkanal 36 gleitend geführt und weist auf seinem Außenumfang Nuten 72 zum Druckausgleich auf. Sein in Figur 2 rechtes Ende, das zugleich das Ende des Ventilkörpers 40 darstellt, weist eine ballige Endfläche 74 auf, die zur zeitweiligen Anlage an der Außenfläche des Exzenters 50 bestimmt ist. Anstelle der balligen Endfläche 74 kann auch eine nicht gezeigte Rolle oder eine eingeschlagene Kugel dienen. Da es der Zweck dieser balligen Endfläche 74, der Rolle oder der Kugel ist, die Relativbewegung zwischen dem Ventilkörper 40 und dem Exzenter 50 mit einem geringen Reibwiderstand erfolgen zu lassen, kann anstatt dieser Lösungen auch ein Schmierfilm aus Öl, Fett oder Graphit vorgesehen werden.

Die Feder 46 ist als Schraubendruckfeder ausgebildet und stützt sich einenends an der Hülse 44 und über diese an der Schulter 42 des Ventilkörpers 40 und anderenends an einem die Ventilkammer 24 dichtend verschließenden Stopfen 70 ab, wobei sie unter einer bestimmten Vorspannung eingesetzt wird.

Der Exzenter 50 ist derart auf die Welle 48 aufgesetzt, daß seine Exzentrizität in der gleichen Ebene liegt wie die Mittelachsen der Ventilkörper 40; die seitlich gelegenen Außenflächen des Exzenters 50, die mit der Endfläche 74 während des Verstellvorgangs in ständigem Kontakt stehen, erstrecken sich daher senkrecht zu der vorgenannten Ebene. Außerdem ist seine Lage so gewählt, daß der Ventilkörper 40 mit seiner Endfläche 74 an ihm seitlich, also insbesondere oberhalb oder unterhalb der Mittellinie der Welle 48 angreift. Durch die Wahl der Angriffslinie des Ventilkörpers 40 an dem Exzenter 50 und somit an einem Kurvenabschnitt vom ihm mit einer bestimmten Krümmung können die Verstellkraft und der -weg beeinflußt werden.

In den Exzenter 50 sind zwei Schlitze 76 eingesägt, die sich bei diesem Ausführungsbeispiel von seitlich der Welle 48 und unten schräg nach oben erstrecken und kurz vor dem Austritt aus dem Exzenter 50 enden.

Jeder der Schlitze 76 ist von einer zu beiden Enden konisch auslaufenden Ausnehmung 78 durchsetzt, deren Mittenachsen parallel zu der der Welle 48 verlaufen. In die konischen Bereiche der Ausnehmung 78 sind eine konische Gewindehülse 80 und eine Schraube 82 mit einem konischen Kopf eingesetzt, die miteinander verschraubt sind. Wenn die Gewindehülse 80 auf die Schraube 82 zugezogen wird, gleitet sie auf den konischen Sitzen in der Ausnehmung und bildet eine Radialkraft, die bewirkt, daß die seitlich jedes Schlitzes 76 liegenden Teile des Exzenters 50 voneinander wegbewegt werden. Auf diese Weise können Toleranzen ausgeglichen werden, die sich auf die Dichtigkeit an dem Sitz zwischen dem Ventilsitz 62 und dem Sitzkegel 68 auswirken bzw. die eine Anlage der Endfläche 74 an dem Exzenter 50 während des Verstellvorgangs verhindern bzw. nach dem Verstellvorgang erlauben würden.

An einer Außenfläche oder an einer Stirnfläche des Exzenters 50 ist eine keilförmige Nut 84 vorgesehen, die so angeordnet ist, daß die Kugel 56 in sie teilweise eintreten kann, wenn sich die Bohrung 56 gegenüber der Nut 84 befindet. Diese soeben beschriebene Situation sollte nur dann eintreten, wenn sich der Exzenter 50 in einer Stellung befindet, die der Neutralstellung der beiden Ventile 38 entspricht, d. h. wenn ein Mediumstrom von oder zu den Verbindungskanälen 34, 34′ nicht stattfindet. Die Neigung des Keils in der Nut 84 kann unterschiedlich gewählt werden und richtet sich danach, ob die Kugel 56 und die mit ihr verbundene Feder 54 den Exzenter 50, d. h. das gesamte Betätigungsglied 20, in seiner Bewegung zur Neutralstellung auf dem letzten Wegstück unterstützen sollen oder nicht. Die Kugel 56 stellt sicher, daß die Endfläche 74 entlastet ist und die Neutralstellung des Exzenters 50 eindeutig reproduzierbar definiert ist.

Nach alledem ergibt sich folgende Funktion der Steuervorrichtung.

Mittels des eingangs beschriebenen Schalters wird über den Elektroschaltkreis dem Schrittmotor 12 ein Befehl erteilt, in einer bestimmten Richtung zu drehen. Gleichzeitig erhält die Kupplung 14 den Befehl zu schließen, um die Drehbewegung von dem Schrittmotor 12 auf das Reduktionsgetriebe 16 übertragen zu können. In dem Reduktionsgetriebe 16 findet eine Drehzahluntersetzung statt, so daß das Betätigungsglied 20 ausgangs des Reduktionsgetriebes 16 mit einer sehr geringen Geschwindigkeit dreht bzw. schwenkt. In dem Fall, daß kein Reduktionsgetriebe 16 vorhanden ist, muß entweder der Schrittmotor 12 selbst mit einer äußerst geringen Geschwindigkeit drehen, oder es muß auf dem Weg zur Kupplung 14 eine Drehzahlherabsetzung stattfinden. Jedenfalls wird das Betätigungsglied 20 mit dem Exzenter 50 um die Mittenachse der Welle 48 geschwenkt. Da während des Verstellvorgangs der Ventilkörper 40 von der Feder 46 auf die Außenfläche des Exzenters 50 gepreßt wird, erfolgt bei einer Drehung der Welle 48 mit Blick auf Figur 2 entgegen dem Uhrzeigerdrehsinn eine Schiebebewegung des Ventilkörpers 40 nach links, so daß der Sitzkegel 68 von dem Sitz in dem Ventilsitz 62 abhebt und es so dem Medium gestattet, von dem Pumpeneinlaß 28 ber die Bohrung 60 und durch den Innenraum des Ventilsitzes 62 hindurch in den Verbindungskanal 34 und den Verbraucherkanal 32 zu strömen.

Sobald der Verbraucher 31 in dem gewünschten Maß verstellt worden ist, wird mittels des Schalters oder einer Regel- bzw. Steuereinrichtung ein Signal erzeugt, demzufolge die Verstellung des Verbrauchers 31 beendet werden soll. Dieses Signal bewirkt, daß die Stromzufuhr zu dem Schrittmotor 12 und gleichzeitig zu der Kupplung 14 unterbrochen wird. Auf diese Weise wird das Betätigungsglied 20 freigeschnitten, während der Schrittmotor 12 aufgrund seines nachwirkenden Schwungmoments noch etwas weiterdrehen kann.

Nachdem die Kupplung 14 geöffnet worden ist, drückt die Feder 46 über die Hülse 44, den Sitzkegel 68, den Schaft 64 und den Steuerkolben 66 derart auf den Exzenter 50, daß dieser mit der Welle 48 in eine Neutralstellung schwenkt. Unmittelbar bevor die Neutralstellung erreicht ist, tritt die Kugel 56 unter der Wirkung der Feder 54 in die Nut 84 ein und bewirkt, daß die Bewegung des Betätigungsglieds 20 beendet wird, und zwar genau in der vorgegebenen Neutralstellungslage. Die Kugel 56 zieht dabei den Exzenter 50 auf dem letzten Bereich seines Schwenkwegs in die Neutralstellung, so daß das zuvor eingestellte Ventilspiel wirksam und der Dichtkegel aus der Richtung der Steuerkammer 26 von Kräften frei wird.

Die erforderliche Kraft der Feder 46 ist abhängig von der Größe des Abstands zwischen der Mittellinie der Welle 48 und dem Angriffspunkt des Ventilkörpers 40 an dem Exzenter 50.

## Patentansprüche

1. Steuervorrichtung (10) für mindestens ein Ventil (38), insbesondere für ein Sitzventil, dessen Ventilkörper (40) unter Federwirkung in eine Endstellung verlagert wird, mit einem einen Exzenter (50) enthaltenden Betätigungsglied (20), das
a) von dem Ventilkörper (40) unter der Federwirkung während des Verstellvorgangs beaufschlagt wird,
b) mittels eines Schrittmotors (12) verstellbar ist,
c) mittels der auf den Ventilkörper (40) aufgebrachten Federwirkung in eine Neutralstellung bringbar ist,
d) mit einer separaten Neutralstellungsvorrichtung versehen ist, die das Betätigungsglied (20) in der Neutralstellung arretiert.

2. Steuervorrichtung nach Anspruch 1, dadurch gekennzeichnet, daß zwischen dem Betätigungsglied (20) und dem Schrittmotor (12) ein Reduktionsgetriebe (16) vorgesehen ist.

3. Steuervorrichtung nach Anspruch 1 und/oder Anspruch 2, dadurch gekennzeichnet, daß sich zwischen dem Schrittmotor (12) und dem Betätigungsglied (20) oder dem Reduktionsgetriebe (16) eine Kupplung (14) befindet.

4. Steuervorrichtung nach Anspruch 3, dadurch gekennzeichnet, daß die Kupplung (14) elektromagnetisch betätigbar ist.

5. Steuervorrichtung nach Anspruch 4, dadurch gekennzeichnet, daß die Kupplung (14) formschlüssig wirkt.

6. Steuervorrichtung nach den Ansprüchen 3 bis 5, dadurch gekennzeichnet, daß die Kupplung (14) die Verbindung zwischen dem Schrittmotor (12) und dem Betätigungsglied (20) unterbricht, wenn der Schrittmotor (12) funktionslos ist oder sich in seiner Ruhestellung befindet.

7. Steuervorrichtung nach einem oder mehreren der vorherigen Ansprüche, dadurch gekennzeichnet, daß der Exzenter (50) in seinen Außenabmessungen, insbesondere in seiner Wirkbreite, veränderbar ist.

8. Steuervorrichtung nach Anspruch 7, dadurch gekennzeichnet, daß der Exzenter (50) mindestens einen Schlitz (76) zum Spreizen aufweist und der Abstand seitlich des Schlitzes (76) gelegener Exzenterwangen mittels einer Spreizvorrichtung (78, 80, 82) veränderbar ist.

9. Steuervorrichtung nach einem oder mehreren der vorherigen Ansprüche, dadurch gekennzeichnet, daß die Neutralstellungsvorrichtung auf das Betätigungsglied (20) oder den Exzenter (50) wirkt.

10. Steuervorrichtung nach einem oder mehreren der vorherigen Ansprüche, dadurch gekennzeichnet, daß der Ventilkörper (40) im Bereich der Schwenkachse des Exzenters (50) und senkrecht bzw. annähernd senkrecht zu dem Exzenter (50) angreift.

11. Steuervorrichtung nach einem oder mehreren der vorherigen Ansprüche, dadurch gekennzeichnet, daß die Neutralstellungsvorrichtung kraftbelastet, insbesondere federbelastet, wirkt.

12. Steuervorrichtung nach einem oder mehreren der vorherigen Ansprüche, dadurch gekennzeichnet, daß der Ventilkörper (40) über Rollkörper oder über einen Schmierfilm an dem Exzenter (50) anliegt.

13. Steuervorrichtung nach einem oder mehreren der vorherigen Ansprüche, dadurch gekennzeichnet, daß im Falle eines Sitzventils der Ventilkörper (40) in der Neutralstellung des Betätigungsglieds (20) vom Exzenter (50) abgehoben ist.

14. Steuervorrichtung nach einem oder mehreren der vorherigen Ansprüche, dadurch gekennzeichnet, daß der Exzenter (50) exzentrisch auf einer Welle (48) des Schrittmotors (12), der Kupplung (14) oder des Reduktionsgetriebes (16) angeordnet ist.

15. Steuervorrichtung nach Anspruch 14, dadurch gekennzeichnet, daß die Welle (48) des Betätigungsgliedes (20) endseitig radial gelagert ist.

## Claims

1. Control device (10) for at least one valve (38), in particular for a seat valve, of which the valve body (40) is displaced under spring action into an end position, with an actuator (20) which contains a cam (50) and which
a) is acted upon by the valve body (40) under the spring action during the displacement operation,
b) is displaceable by means of a stepping motor (12),
c) can be moved into a neutral position by means of the spring action applied to the valve body (40),
d) is provided with a separate neutral position device which locks the actuator (20) in the neutral position.

2. Control device according to claim 1, characterized in that a reduction gear mechanism (16) is provided between the actuator (20) and the stepping motor (12).

3. Control device according to claim 1 and/or claim 2, characterized in that a clutch (14) is located between the stepping motor (12) and the actuator (20) or the reduction gear mechanism (16).

4. Control device according to claim 3, characterized in that the clutch (14) is electromagnetically operated.

5. Control device according to claim 4, characterized in that the clutch (14) acts in form-locking relationship.

6. Control device according to claims 3 to 5, characterized in that the clutch (14) interrupts the connection between the stepping motor (12) and the actuator (20) when the stepping motor (12) is out of operation or in its rest position.

7. Control device according to one or more of the preceding claims, characterized in that the cam (5) is variable in its external dimensions, in particular in its effective width.

8. Control device according to claim 7, characterised in that the cam (50) comprises at least one slot (76) for expansion and the distance between cam faces situated laterally of the slot (76) is variable by means of an expander (78, 80, 82).

9. Control device according to one or more of the preceding claims, characterised in that the neutral position device acts on the actuator (20) or the cam (50).

10. Control device according to one or more of the preceding claims, characterised in that the valve body (40) engages in the region of the pivot axis of the cam (50) and perpendicularly or almost perpendicularly to the cam (50).

11. Control device according to one or more of the preceding claims, characterised in that the neutral position device operates under the load of a force, particularly a spring.

12. Control device according to one or more of the preceding claims, characterised in that the valve body (40) abuts against the cam (50) via rolling bodies or via a lubricating film.

13. Control device according to one or more of the preceding claims, characterised in that in the case of a seat valve the valve body (40) is lifted off the cam (50) in the neutral position of the actuator (20).

14. Control device according to one or more of the preceding claims, characterised in that the cam (50) is arranged eccentrically on a shaft (48) of the stepping motor (12), the clutch (14) or the reduction gear mechanism (16).

15. Control device according to claim 14, characterised in that the shaft (48) of the actuator (20) is mounted radially at the end.

## Revendications

1. Dispositif de commande (10) pour au moins une soupape (38), notamment une soupape à siège, dont le corps de soupape (40) est placé, sous l'action d'un ressort, dans une position d'extrémité, et comportant un organe d'actionnement (20) contenant un excentrique (50) et qui
a) est chargé par le corps de soupape (40) sous l'action du ressort, pendant l'opération de réglage,
b) est réglable à l'aide d'un moteur pas-à-pas (12),
c) peut être amené dans une position neutre au moyen de l'action du ressort appliqué sur le corps de soupape (40),
d) comporte un dispositif séparé de réglage de la position neutre, qui arrête l'organe d'actionnement (20) dans la position neutre.

2. Dispositif de commande selon la revendication 1, caractérisé en ce qu'un engrenage réducteur (16) est prévu entre l'organe d'actionnement (20) et le moteur pas-à-pas (12).

3. Dispositif de commande selon la revendication 1 et/ou la revendication 2, caractérisé en ce qu'un accouplement (14) est disposé entre le moteur pas-à-pas (12) et l'organe d'actionnement (20) ou l'engrenage réducteur (16).

4. Dispositif de commande selon la revendication 3, caractérisé en ce que l'accouplement (14) peut être actionné par voie électromagnétique.

5. Dispositif de commande selon la revendication 4, caractérisé en ce que l'accouplement (14) agit selon une liaison par formes complémentaires.

6. Dispositif de commande selon les revendications 3 à 5, caractérisé en ce que l'accouplement (14) interrompt la liaison entre le moteur pas-à-pas (12) et l'organe d'actionnement (20), lorsque le moteur pas-à-pas (12) ne fonctionne pas ou est situé dans sa position de repos.

7. Dispositif de commande selon une ou plusieurs des revendications précédentes, caractérisé en ce que les dimensions extérieures, notamment la largeur active, de l'excentrique (50) sont modifiables.

8. Dispositif de commande selon la revendication 7, caractérisé en ce que l'excentrique (50) possède au moins une fente (76) pour l'action d'écartement et que la distance entre des mâchoires d'excentrique, disposées latéralement par rapport à la fente (76), peut être modifiée au moyen d'un dispositif d'écartement (78,80,82).

9. Dispositif de commande selon une ou plusieurs des revendications précédentes, caractérisé en ce que le dispositif de réglage de la position neutre agit sur l'organe d'actionnement (20) ou sur l'excentrique (50).

10. Dispositif de commande selon une ou plusieurs des revendications précédentes, caractérisé en ce que le corps de soupape (40) attaque l'excentrique (50) au niveau de son axe de pivotement et perpendiculairement ou à proximativement perpendiculairement à l'excentrique (50).

11. Dispositif de commande selon une ou plusieurs des revendications précédentes, caractérisé en ce que le dispositif de réglage de la position neutre agit en étant chargé par une force, notamment en étant chargé par un ressort.

12. Dispositif de commande selon une ou plusieurs des revendications précédentes, caractérisé en ce que le corps de soupape (40) s'applique, par l'intermédiaire de corps de roulement ou moyennant l'interposition d'une pellicule de lubrifiant sur l'excentrique (50).

13. Dispositif de commande selon une ou plusieurs des revendications précédentes, caractérisé en ce que dans le cas d'une soupape à siège, le corps de soupape (40) est écarté de l'excentrique (50) lorsque l'organe d'actionnement (20) est dans la position neutre.

14. Dispositif de commande selon une ou plusieurs des revendications précédentes, caractérisé en ce que l'excentrique (50) est monté d'une manière excentrée sur l'arbre (48) du moteur pas-à-pas (12), de l'accouplement (14) ou de l'engrenage réducteur (16).

15. Dispositif de commande selon la revendication 14, caractérisé en ce que l'arbre (48) de l'organe d'actionnement (20) est monté radialement d'un côté.
